# EUROPEAN PATENT APPLICATION

(11) **EP 4 014 770 A1**
(43) Date of publication of application: **22.06.2022**
(21) Application number: 19947247.3
(22) Date of filing: 25.09.2019
(51) Int. Cl.: A24F 47/00

(54) **BATTERY UNIT, AEROSOL GENERATION DEVICE, INFORMATION PROCESSING METHOD, AND PROGRAM**

(71) Applicant: Japan Tobacco Inc., Tokyo 105-6927 (JP)
(72) Inventor: ONO, Yasuhiro, Tokyo 130-8603 (JP)
(74) Representative: Hoffmann Eitle
(86) International application number: PCT/JP2019/037517
(87) International publication number: WO 2021/059382

(57) **Abstract**

A battery unit for an aerosol generation device that generates an aerosol, wherein the battery unit comprises a communication unit (108) that executes wireless communication between the aerosol generation device and a user terminal (2), a battery remaining charge assessment unit (202) that assesses the remaining charge of a battery (110) that supplies electric power to the aerosol generation device, and a wireless communication control unit (204) that controls the wireless communication on the basis of the remaining charge of the battery (110). This makes it possible to reduce power consumption of the battery (110) provided to the aerosol generation device.

## Description

### Technical Field

The present invention relates to a battery unit, an aerosol generation device, an information processing method, and a program.

### Background Art

Patent Literature 1 discloses a technique for an electronic cigarette to communicate with an external device via short-range wireless communication such as Bluetooth [registered trademark].

### Citation List

### Patent Literature

Patent Literature 1: JP2018-533923A

### Summary of Invention

### Technical Problem

A conventional electronic cigarette as described in Patent Literature 1 is demanded for reduction in the size of a main body thereof. Since the size of a battery included in the electronic cigarette is limited, the battery capacity is also limited.

In the electronic cigarette described in Patent Literature 1, electric power consumption from the battery is estimated during user operation of the electronic cigarette. The electronic cigarette notifies an external device of the estimated electric power consumption via short-range wireless communication such as Bluetooth to report the estimated power consumption to the user. The execution of such short-range wireless communication increases the electric power consumption of the electronic cigarette and also increases battery consumption. As a result, it may be impossible to ensure a remaining battery amount sufficient for the user to perform a puff action of inhaling an aerosol using the electronic cigarette.

Accordingly, some aspects of the present invention have been made in view of the foregoing situation, and an object thereof is to provide a technique that can reduce the consumption of a battery included in an aerosol generation device for generating an aerosol.

### Solution to Problem

A battery unit according to an aspect of the present invention is a battery unit for an aerosol generation device for generating an aerosol, including a communication unit configured to execute wireless communication between the aerosol generation device and a user terminal; and a control unit configured to determine a remaining amount of a battery that supplies electric power to the aerosol generation device, wherein the control unit is configured to control the wireless communication based on the remaining amount of the battery.

An aerosol generation device according to an aspect of the present invention is an aerosol generation device for generating an aerosol, including a communication unit configured to execute wireless communication between the aerosol generation device and a user terminal; and a control unit configured to determine a remaining amount of a battery that supplies electric power to the aerosol generation device, wherein the control unit is configured to control the wireless communication based on the remaining amount of the battery.

An information processing method according to an aspect of the present invention is an information processing method executed by an aerosol generation device for generating an aerosol, including a step of executing wireless communication between the aerosol generation device and a user terminal; a step of determining a remaining amount of a battery that supplies electric power to the aerosol generation device; and a step of controlling the wireless communication based on the remaining amount of the battery.

A program according to an aspect of the present invention is a program for causing a computer to implement a communication function of executing wireless communication between the aerosol generation device and a user terminal; and a control function of determining a remaining amount of a battery that supplies electric power to the aerosol generation device, wherein the control function controls the wireless communication based on the remaining amount of the battery.

According to these aspects, wireless communication executed between the aerosol generation device and the user terminal is controlled based on the remaining amount of the battery that supplies electric power to the aerosol generation device. As a result, an increase in the electric power consumption of the aerosol generation device can be suppressed, and thus the consumption of a battery included in the aerosol generation device can be reduced.

In the present invention, the terms "unit" or "part" and "device" do not simply refer to physical means and may include functions of the "unit" or "part" and "device", which are implemented by software. In addition, the functions of one "unit" or "part" or one "device" may be implemented by two or more physical means or devices, or the functions of two or more "units" or "parts" or two or more "devices" may be implemented by one physical means or device.

### Advantageous Effects of Invention

According to the present invention, it is possible to reduce the consumption of a battery included in an aerosol generation device.

### Brief Description of Drawings

[FIG. 1] FIG. 1 is a schematic configuration diagram of an information processing system according to an embodiment of the present invention.
[FIG. 2A] FIG. 2A is a block diagram of a schematic configuration of a flavor inhaler according to the embodiment of the present invention.
[FIG. 2B] FIG. 2B is a diagram illustrating an example schematic appearance of the flavor inhaler according to the embodiment of the present invention.
[FIG. 3] FIG. 3 is a block diagram illustrating a schematic configuration of the flavor inhaler according to the embodiment of the present invention.
[FIG. 4] FIG. 4 is a block diagram illustrating another schematic configuration of the flavor inhaler according to the embodiment of the present invention.
[FIG. 5] FIG. 5 is a diagram illustrating another example schematic appearance of the flavor inhaler according to the embodiment of the present invention.
[FIG. 6] FIG. 6 illustrates another example schematic appearance of the flavor inhaler according to the embodiment of the present invention with an aerosol generating substrate held.
[FIG. 7] FIG. 7 is a block diagram of a schematic configuration of a user terminal according to the embodiment of the present invention.
[FIG. 8] FIG. 8 is a schematic configuration diagram illustrating an example functional configuration of a control unit according to the embodiment of the present invention.
[FIG. 9] FIG. 9 is a flowchart illustrating an example of a communication control process according to a first embodiment of the present invention.
[FIG. 10] FIG. 10 is a flowchart illustrating an example of a communication control process according to a second embodiment of the present invention.
[FIG. 11] FIG. 11 is a flowchart illustrating an example of a communication control process according to a third embodiment of the present invention.
[FIG. 12] FIG. 12 is a diagram illustrating an example hardware configuration of a computer according to an embodiment of the present invention.

### Description of Embodiments

Embodiments of the present invention will be described hereinafter with reference to the accompanying drawings. The following embodiments are illustrative for describing the present invention and are not intended to limit the present invention to only the embodiments thereof. Further, the present invention may be modified in various ways without departing from the gist thereof. In addition, in the drawings, the same structural elements are denoted by the same reference signs as much as possible, and redundant description will be omitted.

### [Configuration of Information Processing System]

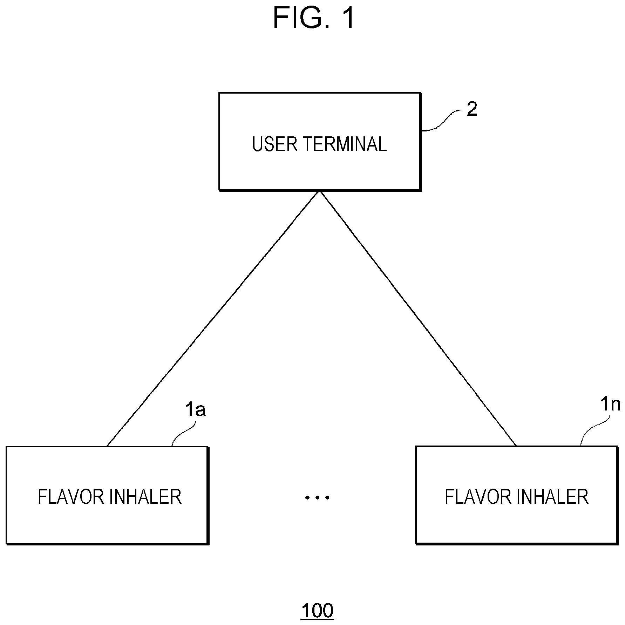

FIG. 1 is a schematic configuration diagram (system configuration diagram) of an information processing system according to this embodiment of the present invention. As illustrated in FIG. 1, an information processing system 100 is configured to include, for illustrative purposes, n flavor inhalers 1 (n is any integer value greater than or equal to 1), and a user terminal 2 configured to be capable of communicating with the n flavor inhalers 1.

The "flavor inhaler 1" is a tool used to inhale flavor and is intended to be, for example, but not limited to, an electronic cigarette, a heat-not-burn tobacco product, or a conventional tobacco product. The flavor inhaler 1 may be an aerosol generation device that generates an aerosol and that is used to inhale the generated aerosol. The action of inhaling an aerosol is referred to as "puff action", and the number of times a puff action is performed is referred to as the "number of puffs". The aerosol generation device is intended to be, for example, an electronic cigarette, a heat-not-burn tobacco product, or a nebulizer for medical use. More specifically, the aerosol generation device is, for example, a device that atomizes a liquid (aerosol source) using electric power to generate an aerosol. The aerosol is obtained by atomizing an aerosol source and is a suspension of fine particles in a gas. The aerosol produced by the aerosol generation device may include a flavor. Examples of the aerosol generation device include a heat-not-burn tobacco product and an electronic cigarette. The aerosol generation device further includes a type that directly heats tobacco (direct heating), a type that indirectly heats tobacco (indirect heating), and a type that heats a liquid. Alternatively, the aerosol generation device may produce SAWs (Surface Acoustic Waves) using a piezoelectric element substrate having a pair of comb electrodes to atomize a liquid. In the figure, a flavor inhaler 1a and a flavor inhaler In are illustrated as n flavor inhalers. In the following description, these n flavor inhalers are simply referred to as "flavor inhalers 1" with some reference signs omitted, when they are described without being distinguished from each other.

The user terminal 2 is implemented by, for example, a smartphone, a game console, or a personal computer. One user terminal 2 is illustrated in the figure, but it is not limited thereto. The information processing system 100 may include a plurality of user terminals 2.

The flavor inhaler 1 and the user terminal 2 are associated with each other and are capable of executing short-range wireless communication such as Bluetooth or BLE (Bluetooth Low Energy) communication to transmit and receive information to and from each other. Transmission and reception of information between the flavor inhaler 1 and the user terminal 2 is not limited to BLE communication and may be executed by any communication such as Wi-Fi [registered trademark], LPWAN (Low Power Wide Area Network), or NFC (Near Field Communication). In addition, transmission and reception of information between the flavor inhaler 1 and the user terminal 2 is not limited to wireless communication and may be wired communication such as USB (Universal Serial Bus), Mini USB, Micro USB, or Lightning.

The flavor inhaler 1 and the user terminal 2 included in the information processing system 100 will be described in detail hereinafter.

### [Configuration of Flavor Inhaler]

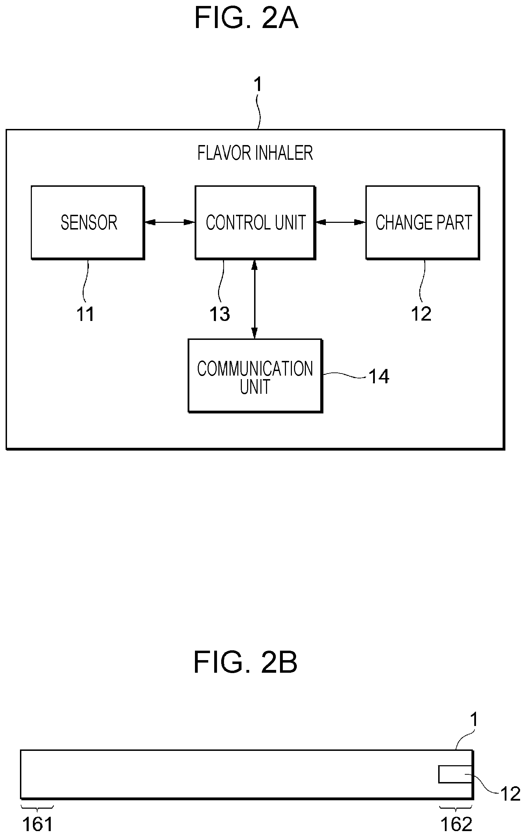

FIG. 2A is a block diagram of a schematic configuration of the flavor inhaler according to the embodiment of the present invention. It should be noted that FIG. 2A schematically and conceptually illustrates components included in the flavor inhaler 1 and does not illustrate the precise arrangement, shape, size, positional relationship, and the like of the components and the flavor inhaler 1. It should also be noted that the flavor inhaler 1 may include a component not illustrated in FIG. 2A, such as a tobacco capsule or a liquid cartridge.

A sensor 11 represents a sensor that detects information regarding, for example, inhalation of a user. The sensor 11 may be any type of sensor for detecting a puff action (an inhalation action) of the user, such as a flow sensor, a flow velocity sensor, or a pressure sensor. The sensor 11 may be a button to be pressed by the user to perform a puff action. For example, the sensor 11 may be an inhalation sensor and may detect an inhalation of the user through the flavor inhaler 1. The sensor 11 may be an air flow sensor and may detect an air flow generated by inhalation of the user. The sensor 11 may be a GPS sensor that measures the position of the flavor inhaler 1. The sensor 11 may be a motion sensor that detects a movement of the flavor inhaler 1. The motion sensor may be, for example, a gyro sensor or the like for detecting an angle, a posture, or the like of the flavor inhaler 1, or may be an acceleration sensor for detecting a movement of the flavor inhaler 1 in each axial direction. The motion sensor may be a combination of a gyro sensor, an acceleration sensor, and the like.

A change part 12 is a block that generates a predetermined change that is externally observable. The change part 12 may be an LED (Light Emitting Diode) that emits light of a predetermined color, for example, a blue LED, and the predetermined change may be light emission of a predetermined color, for example, blue. The predetermined color is not limited to blue and may be any color. The predetermined change may be a change in the color of light emission or a change in the intensity of light emission according to the strength (pressure) of inhalation, which is sensed by the sensor 11. The change part 12 is not limited to an LED and may be a light source having another configuration that emits light of a predetermined color.

FIG. 2B is a diagram illustrating an example schematic appearance of the flavor inhaler according to the embodiment of the present invention. The arrangement of the change part 12 will be described with reference to FIG. 2B. As presented in FIG. 2B, the flavor inhaler 1 may be, but not limited to, of a stick shape including two ends 161 and 162. The user holds the one end 161 in the mouth to inhale. The user may hold the one end 161 in the mouth to inhale through a mouthpiece for a cigarette or the like attachable to the one end 161. In a case where the flavor inhaler 1 has the shape as presented in FIG. 2B, the change part 12 is preferably disposed in the other end 162 of the two ends. The change part 12 is at least a portion of an outer surface of the flavor inhaler 1 and may have any shape such as a substantially rectangular shape as presented in FIG. 2B or an annular shape (not illustrated) along the outer circumference of the flavor inhaler 1.

Referring back to FIG. 2A, a control unit 13 is a block that causes the change part 12 to generate a predetermined change on the basis of at least a signal from the sensor 11. The control unit 13 may cause the change part 12 to produce light emission of a predetermined color when, for example, the magnitude of the signal from the sensor 11 or the strength of inhalation determined based on the signal is greater than or equal to a predetermined threshold value. Further, the control unit 13 may change the color or intensity of light emission of the change part 12 in accordance with, for example, the magnitude of the signal from the sensor 11 or the strength of inhalation determined based on the signal. For example, the control unit 13 may increase the intensity of light emission when inhalation is strong, and decrease the intensity of light emission when inhalation is weak. Alternatively, for example, the control unit 13 may divide the strength of inhalation into a plurality of levels, set a predetermined color for each of the plurality of levels, and cause emission of light of the predetermined color corresponding to the strength of inhalation. The control unit 13 may be an electronic circuit module configured as a microprocessor or a microcomputer.

A communication unit 14 performs wireless communication with an external device including the user terminal 2 illustrated in FIG. 1 or another computer. For example, when executing short-range wireless communication such as Bluetooth or BLE communication with the external device, the communication unit 14 executes an authentication connection (corresponding to, for example, a pairing process for Bluetooth) that is a process of configuring a communication connection between the flavor inhaler 1 and the external device. The authentication connection is, for example, a process necessary to start communication between the flavor inhaler 1 and the external device. Appropriate authentication connection enables encrypted communication to be executed between the flavor inhaler 1 and the external device. The communication unit 14 may receive a request for an authentication connection from the external device or may transmit a request for an authentication connection to the external device. The communication unit 14 may be implemented using at least a network interface serving as a hardware resource. The control unit 13 is capable of transmitting various kinds of information detected by the sensor 11 to the user terminal 2 or another computer through the communication unit 14. The various kinds of information to be transmitted from the control unit 13 to the user terminal 2 or another computer through the communication unit 14 include, for example, output information for allowing the user terminal 2 to output the state of the flavor inhaler 1. Further, the communication unit 14 is capable of receiving various kinds of information transmitted from the user terminal 2 or another computer. The output information may be information indicating the remaining amount of a battery 110.

The flavor inhaler 1 according to an embodiment of the present invention includes a conventional tobacco product. The conventional tobacco product does not include the sensor 11, the control unit 13, or the communication unit 14, but a burning portion thereof corresponds to the change part 12. This is because a predetermined change in color or temperature is generated in the burning portion of the conventional tobacco product in response to a puff action of the user.

In a case where the flavor inhaler 1 is a conventional tobacco product (for example, a cigarette), a mouthpiece (for example, a mouthpiece for a cigarette) attached to one end of the tobacco product may include all or some of the functions of the sensor 11, the control unit 13, and the communication unit 14 in FIG. 2A. In this configuration, the mouthpiece is capable of transmitting various kinds of information such as inhalation information detected by the sensor 11 to the user terminal 2 or another computer.

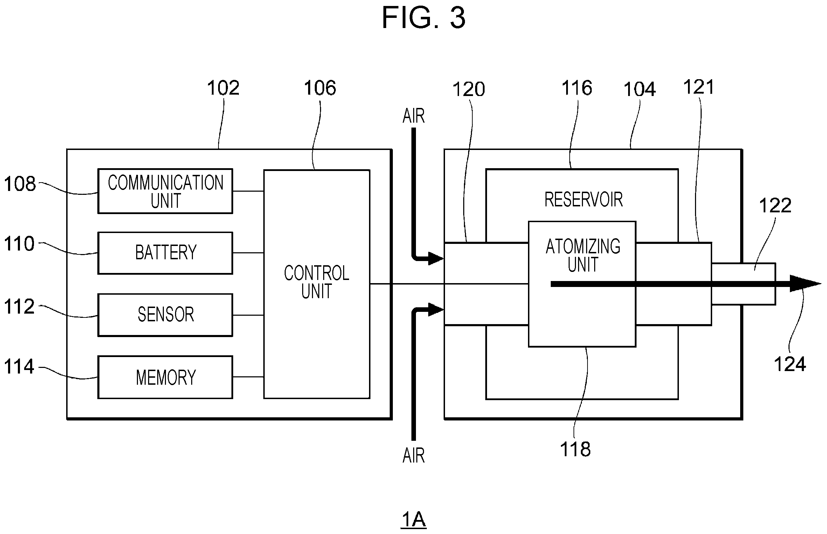

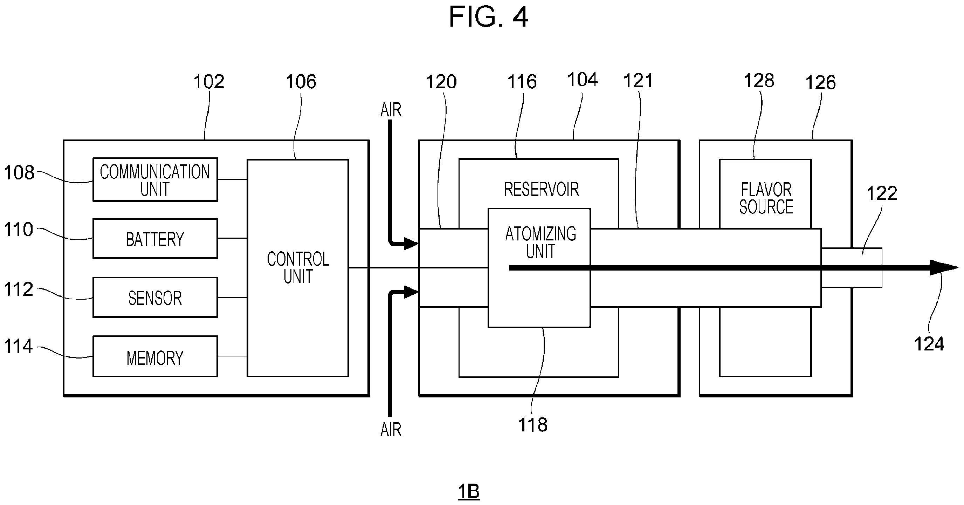

FIG. 3 is a block diagram illustrating a schematic configuration of the flavor inhaler according to the embodiment of the present invention. As illustrated in FIG. 3, a flavor inhaler 1A includes a first member 102 (battery unit) and a second member 104 (cartridge). As illustrated in the diagram, in one example, the first member 102 may include a control unit 106, a communication unit 108, the battery 110, a sensor 112, and a memory 114. The control unit 13 in FIG. 2A corresponds to the control unit 106 in FIG. 3, the sensor 11 in FIG. 2A corresponds to the sensor 112 in FIG. 3, and the communication unit 14 in FIG. 2A corresponds to the communication unit 108 in FIG. 3. In FIG. 3 and FIG. 4, the first member 102 (battery unit) is described as, but not limited to, an element included in the flavor inhaler 1A. For example, an element included in the first member 102, that is, at least one of the control unit 106, the communication unit 108, the battery 110, the sensor 112, or the memory 114, may be an element external to the flavor inhaler 1A.

In one example, the second member 104 may include a reservoir 116, an atomizing unit 118, an air intake flow path 120, an aerosol flow path 121, and an inhalation port part 122. Some of the components included in the first member 102 may be included in the second member 104. Some of the components included in the second member 104 may be included in the first member 102. The second member 104 may be configured to be removably attached to the first member 102. Alternatively, all of the components included in the first member 102 and the second member 104 may be included in the same housing instead of the first member 102 and the second member 104.

The reservoir 116 holds an aerosol source. For example, the reservoir 116 is composed of a fibrous or porous raw material and holds an aerosol source as a liquid in gaps between fibers or in pores of the porous material. As the fibrous or porous raw material described above, for example, cotton, glass fiber, or a tobacco raw material can be used. The reservoir 116 may be configured as a tank accommodating a liquid. The aerosol source is a liquid such as a polyhydric alcohol, for example, glycerine or propylene glycol, or water. In a case where the flavor inhaler 1A is a medical inhaler such as a nebulizer, the aerosol source may also include a medicine to be inhaled by a patient. In another example, the aerosol source may include a tobacco raw material or an extract derived from a tobacco raw material that releases an inhaling flavor component when heated. The reservoir 116 may have a configuration in which the aerosol source can be replenished as it is consumed. Alternatively, the reservoir 116 may be configured such that the reservoir 116 itself can be replaced when the aerosol source is consumed. The aerosol source is not limited to a liquid and may be a solid. In a case where the aerosol source is a solid, for example, the reservoir 116 may be a hollow container that is not made of a fibrous or porous raw material.

The atomizing unit 118 is configured to atomize the aerosol source to generate an aerosol. When the sensor 112 detects an inhalation action, the atomizing unit 118 generates an aerosol. For example, a wick (not illustrated) may be disposed so as to couple the reservoir 116 and the atomizing unit 118 to each other. In this case, a portion of the wick communicates with the inside of the reservoir 116 and is in contact with the aerosol source. Another portion of the wick extends to the atomizing unit 118. The aerosol source is transferred from the reservoir 116 to the atomizing unit 118 by capillary action of the wick. In one example, the atomizing unit 118 includes a heater electrically connected to the battery 110. The heater is disposed in contact with or in close proximity to the wick. When an inhalation action is detected, the control unit 106 controls the heater of the atomizing unit 118 to heat the aerosol source transferred through the wick to atomize the aerosol source. In another example, the atomizing unit 118 may be an ultrasonic atomizer that atomizes the aerosol source by ultrasonic vibration. The atomizing unit 118 is connected to the air intake flow path 120, and the air intake flow path 120 communicates with the outside of the flavor inhaler 1A. The aerosol generated in the atomizing unit 118 is mixed with air taken in through the air intake flow path 120. A fluid mixture of the aerosol and the air is delivered to the aerosol flow path 121, as indicated by an arrow 124. The aerosol flow path 121 has a tubular structure for conveying the fluid mixture of the air and the aerosol generated in the atomizing unit 118 to the inhalation port part 122.

The inhalation port part 122 is located at a terminal end of the aerosol flow path 121 and is configured to open the aerosol flow path 121 to the outside of the flavor inhaler 1A. The user holds the inhalation port part 122 in the mouth and inhales to take air containing the aerosol into the oral cavity.

The communication unit 108 communicates with the user terminal or another computer. The communication unit 108 may be implemented using at least a network interface serving as a hardware resource.

The battery 110 supplies electric power to the components of the flavor inhaler 1A, such as the communication unit 108, the sensor 112, the memory 114, and the atomizing unit 118. The battery 110 may be chargeable when connected to an external power supply via a predetermined port (not illustrated) of the flavor inhaler 1A. Only the battery 110 may be removable from the first member 102 or the flavor inhaler 1A and may be replaceable with a new battery 110. Alternatively, the battery 110 may be replaceable with a new battery 110 by replacing the entire first member 102 with a new first member 102.

The sensor 112 may include a pressure sensor that detects pressure fluctuations or a flow sensor that detects a flow rate in the air intake flow path 120 and/or the aerosol flow path 121. The sensor 112 may also include a weight sensor that detects the weight of a component such as the reservoir 116. The sensor 112 may also be configured to detect a puff action performed by the user using the flavor inhaler 1A. The sensor 112 may also be configured to add up the amount of time during which the atomizing unit 118 is energized. The sensor 112 may also be configured to detect the height of the liquid level in the reservoir 116. The sensor 112 may also be configured to detect the SOC (State of Charge), the integrated current value, the voltage, and the like of the battery 110. The integrated current value may be determined by a current integration method, an SOC-OCV (Open Circuit Voltage) method, or the like. The sensor 112 may also be an operation button or the like operable by the user.

The control unit 106 may be an electronic circuit module configured as a microprocessor or a microcomputer. The control unit 106 may be configured to control the operation of the flavor inhaler 1A in accordance with a computer-executable command stored in the memory 114. The memory 114 is a storage medium such as a ROM, a RAM, or a flash memory. The memory 114 may store the computer-executable command described above, setting information necessary for controlling the flavor inhaler 1A, and the like. The memory 114 stores, for example, remaining battery amount information regarding the remaining amount of the battery 110 of the flavor inhaler 1A.

The remaining amount of the battery 110 may be indicated by, for example, a percentage (%) of how much of the entire battery capacity remains, or may be displayed using another method. For example, the remaining amount of the battery 110 may be indicated by percentage (%) such as 70%, by fraction such as 3/10, or by capacity such as 300 mAh. The memory 114 may further include one or more threshold values regarding the remaining amount of the battery 110 or one or more threshold values regarding the integrated current value or the voltage value of the battery 110. In this case, the control unit 106 measures the remaining amount of the battery 110 that supplies electric power to the flavor inhaler 1A illustrated in FIGs. 3 and 4. The control unit 106 measures the remaining amount of the battery on the basis of information on the battery 110, such as the SOC, the integrated current value, or the voltage, detected by, for example, the sensor 112.

The memory 114 may further store flavor inhaler state information regarding the state of the flavor inhaler 1A. The flavor inhaler state information includes information regarding a state in which a puff action is being executed on the flavor inhaler 1A (for example, a state in which the atomizing unit 118 is heating the heater to atomize the aerosol source), a state in which the flavor inhaler 1A is being used by a user (for example, a state in which vibration of the flavor inhaler 1A is detected by the sensor 112), or a sleep state that the flavor inhaler 1A is in (for example, a state in which at least some of the elements included in the flavor inhaler 1A other than the battery 110 are not functioning). The case where the flavor inhaler 1A is brought into the sleep state includes, but is not limited to, a case where the flavor inhaler 1A is manufactured and stored as inventory for a long period of time before being shipped.

The flavor inhaler state information may include, for example, number-of-puff information regarding the number of puffs. For example, the memory 114 may store various types of information such as control methods for the communication unit 108 (such as modes of light emission, audio emission, vibration, etc.), values detected by the sensor 112, and a heating history of the heater by the atomizing unit 118. The control unit 106 reads information from the memory 114 as necessary, uses the information to control the flavor inhaler 1A, and stores the information in the memory 114 as necessary.

FIG. 4 is a block diagram illustrating another schematic configuration of the flavor inhaler according to the embodiment of the present invention. As illustrated in the diagram, a flavor inhaler 1B includes a third member 126 in addition to the elements included in the flavor inhaler 1A in FIG. 3. The third member 126 may include a flavor source 128. In one example, in a case where the flavor inhaler 1B is an electronic cigarette, the flavor source 128 may include an inhaling flavor component of tobacco. As illustrated in the diagram, the aerosol flow path 121 extends across the second member 104 and the third member 126. The inhalation port part 122 is included in the third member 126.

The flavor source 128 is a component for imparting a flavor to the aerosol. The flavor source 128 is disposed in the middle of the aerosol flow path 121. The fluid mixture of the air and the aerosol generated by the atomizing unit 118 (it should be noted that the fluid mixture may hereinafter be referred to simply as the aerosol) flows to the inhalation port part 122 through the aerosol flow path 121. In this manner, the flavor source 128 is disposed downstream of the atomizing unit 118 with respect to the flow of the aerosol. In other words, the flavor source 128 is located closer to the inhalation port part 122 in the aerosol flow path 121 than the atomizing unit 118. Accordingly, the aerosol generated by the atomizing unit 118 passes through the flavor source 128 before reaching the inhalation port part 122. As the aerosol passes through the flavor source 128, the inhaling flavor component contained in the flavor source 128 is imparted to the aerosol. In one example, in a case where the flavor inhaler 1B is a heat-not-burn tobacco product, the flavor source 128 may be one derived from tobacco, such as a shredded tobacco or a processed product obtained by forming a tobacco raw material into a granular, sheet, or powder shape. Alternatively, the flavor source 128 may be one not derived from tobacco, which is made from a non-tobacco plant (for example, mint or a herb). In one example, the flavor source 128 includes a tobacco component. The flavor source 128 may contain a flavor component such as menthol. In addition to the flavor source 128, the reservoir 116 may also have a substance containing an inhaling flavor component. For example, the flavor inhaler 1B may be configured such that the flavor source 128 holds a flavor substance derived from tobacco and the reservoir 116 includes a flavor substance not derived from tobacco.

The user holds the inhalation port part 122 in the mouth and inhales. As a result, the user can take air containing the aerosol to which the flavor has been imparted into the oral cavity.

The control unit 106 is configured to control the flavor inhalers 1A and 1B (hereinafter may be collectively referred to as the "flavor inhaler 1") according to the embodiment of the present disclosure in various ways.

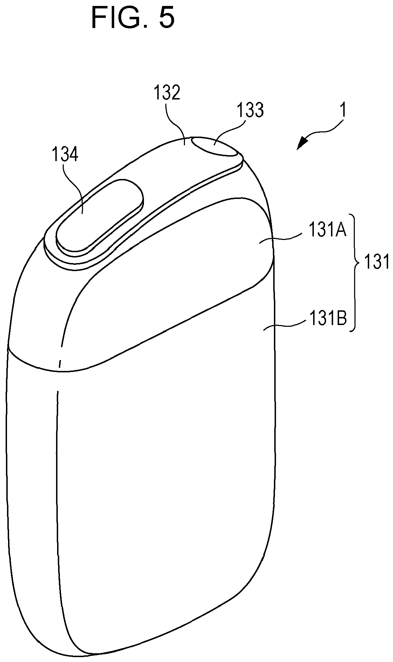

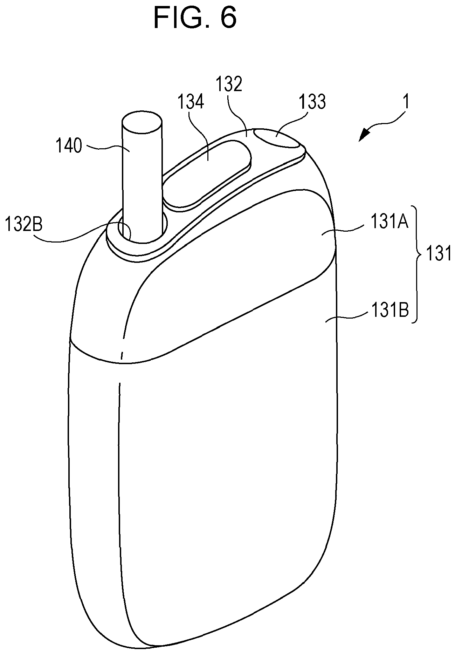

FIG. 5 is a diagram illustrating another example schematic appearance of the flavor inhaler according to the embodiment of the present invention. FIG. 6 illustrates another example schematic appearance of the flavor inhaler according to the embodiment of the present invention with an aerosol generating substrate held. In this embodiment, for example, the flavor inhaler 1 is configured to heat an aerosol generating substrate such as an inhalation article having a flavor producing material such as a filler that contains an aerosol source and a flavor source to generate an aerosol including a flavor. An inhalation article 140 may be used as the aerosol generating substrate.

As will be understood by a person skilled in the art, the inhalation article 140 is merely an example of the aerosol generating substrate. The aerosol source contained in the aerosol generating substrate may be a solid or a liquid. The aerosol source may be a liquid such as a polyhydric alcohol, for example, glycerine or propylene glycol, or water, and a mixture thereof. The aerosol source may include a tobacco raw material or an extract derived from a tobacco raw material that releases an inhaling flavor component when heated. In a case where the flavor inhaler 1 is a medical inhaler such as a nebulizer, the aerosol source may include a medicine to be inhaled by a patient. The aerosol generating substrate may include no flavor source in some applications.

As illustrated in FIG. 5 and FIG. 6, the flavor inhaler 1 has a top housing 131A, a bottom housing 131B, a cover 132, a switch 133, and a lid part 134. The top housing 131A and the bottom housing 131B are connected to each other to form an outermost housing 131 of the flavor inhaler 1. The housing 131 may be sized to fit in a user's hand. In this case, when the user uses the flavor inhaler 1, the user can hold the flavor inhaler 1 with their hand and inhale the aerosol.

The top housing 131A has an opening (not illustrated), and the cover 132 is coupled to the top housing 131A such that the opening is closed. As illustrated in FIG. 6, the cover 132 has an opening 132B into which the inhalation article 140 can be inserted. The lid part 134 is configured to open and close the opening 132B in the cover 132. Specifically, the lid part 134 is attached to the cover 132 and is configured to be movable along the front surface of the cover 132 between a first position at which the opening 132B is closed and a second position at which the opening 132B is opened.

The switch 133 is used to switch on and off the operation of the flavor inhaler 1. For example, as illustrated in FIG. 6, the user operates the switch 133 with the inhalation article 140 inserted into the opening 132B to supply electric power from the battery (not illustrated) to a heater unit (not illustrated). As a result, the inhalation article 140 can be heated without being burned. When the inhalation article 140 is heated, an aerosol is produced from the aerosol source included in the inhalation article 140, and the flavor of the flavor source is incorporated into the aerosol. The user inhales a portion of the inhalation article 140 (a portion illustrated in FIG. 6) protruding from the flavor inhaler 1, thereby being able to inhale the aerosol containing the flavor. In this specification, a direction in which an aerosol generating substrate such as the inhalation article 140 is inserted into the opening 132B is referred to as a longitudinal direction of the flavor inhaler 1.

The configuration of the flavor inhaler 1 illustrated in FIG. 5 and FIG. 6 is merely an example of the configuration of a flavor inhaler according to the present disclosure. The flavor inhaler according to the present disclosure can be configured in various forms such that an aerosol can be generated by heating an aerosol generating substrate including an aerosol source and the user can inhale the generated aerosol source.

### [Configuration of User Terminal]

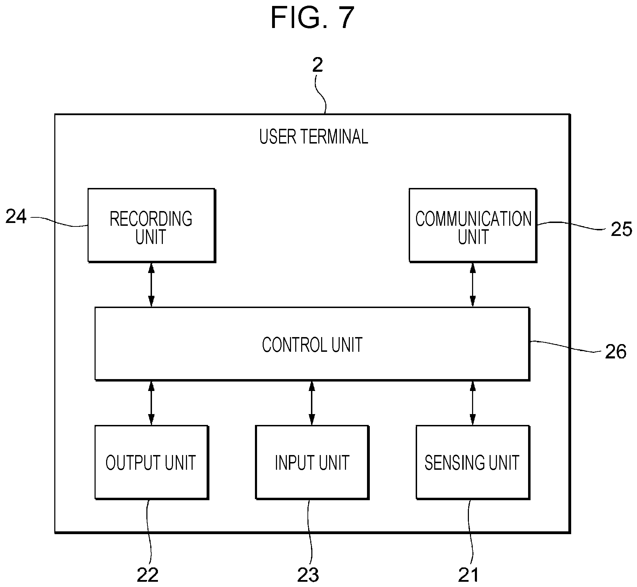

FIG. 7 is a block diagram of a schematic configuration of a user terminal according to the embodiment of the present invention. It should be noted that FIG. 7 schematically and conceptually illustrates components included in the user terminal 2 and does not illustrate the precise arrangement, shape, size, positional relationship, and the like of the components and the user terminal 2. It should also be noted that the user terminal 2 may include a component not illustrated. A non-limiting example of the user terminal 2 is a computer such as a smartphone, a tablet, or a personal computer. For example, a sensing unit 21 described below may be implemented by a digital camera externally connected to the computer.

The sensing unit 21 detects an externally observable predetermined change generated in at least a portion of the flavor inhaler 1, for example, in the change part 12. The sensing unit 21 may be implemented using at least a digital camera, a temperature sensor, or the like serving as a hardware resource.

An output unit 22 executes a message output process on the basis of output information notified from the flavor inhaler 1 illustrated in FIG. 1. The output unit 22 may execute an audio output process on the basis of output information notified from the flavor inhaler 1. The output unit 22 displays information indicating that the predetermined change described above has been detected. The output unit 22 may be implemented using at least a display (including a touch panel display, for example) or the like serving as a hardware resource.

An input unit 23 receives an input from the user. The input unit 23 may be implemented using at least a keyboard, a mouse, a touch panel display, or the like serving as a hardware resource.

A recording unit 24 stores programs, information, and the like. The recording unit 24 may be implemented using at least an HDD (Hard Disk Drive), an SSD (Solid State Drive), a memory, or the like serving as a hardware resource.

A communication unit 25 communicates with another computer. The communication unit 25 may be implemented using at least a network interface serving as a hardware resource.

A control unit 26 performs various controls. The control unit 26 may be configured to transmit and receive information through the communication unit 25. The output unit 22 can output information based on the received output information. For example, the control unit 26 may be configured to make a determination related to the way in which the user inhales. The output unit 22 can further display a result of the determination. Further, the control unit 26 may be configured to enable the user to select one of a plurality of ways of inhaling via the input unit 23. The output unit 22 can further display information based on the selected way of inhaling. The control unit 26 may be implemented using at least a processor or the like serving as a hardware resource.

Various functions of the user terminal 2 may be implemented by using an application operating on the user terminal 2. The user terminal 2 may download an application and implement various functions by using the downloaded application. Alternatively, the user terminal 2 may download a program for implementing various functions of the user terminal 2 and execute the downloaded program to implement various functions. The user terminal 2 may implement these functions by using PWA (Progressive Web Apps).

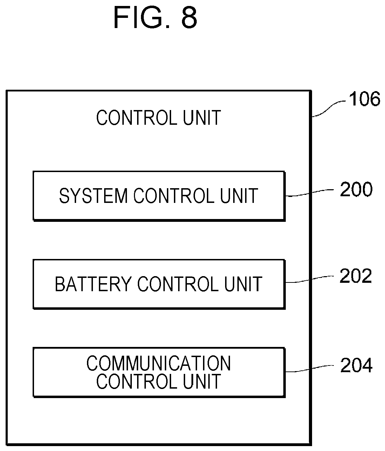

FIG. 8 is a schematic configuration diagram illustrating an example functional configuration of a control unit according to the embodiment of the present invention. As illustrated in FIG. 8, the control unit 106 functionally includes a system control unit 200, a battery control unit 202, and a communication control unit 204.

The control unit 106 can be implemented by, for example, a CPU or the like executing a program stored in the memory 114 illustrated FIGs. 3 and 4. Alternatively, the control unit 106 may be implemented by downloading a program to be used for processing of the control unit 106 and executing the downloaded program. The control unit 13 illustrated in FIG. 2A may functionally include the system control unit 200, the communication control unit 204, and the battery control unit 202. The functions included in the control unit 106 or the control unit 13, described above, may be included in another element. For example, the communication control unit 204 may be included in the communication unit 108 illustrated in FIGs. 3 and 4.

The communication between the flavor inhaler 1 and the user terminal 2 may be any communication such as short-range wireless communication and will be described hereinafter in the case of BLE (Bluetooth Low Energy) communication as an example.

The system control unit 200 controls the functions included in the control unit 106 (in the example in FIG. 8, the system control unit 200, the battery control unit 202, and the communication control unit 204). The system control unit 200 further controls execution of various control programs, an embedded operating system (OS) program, and the like. For example, upon detection of various request signals such as an activation instruction, the system control unit 200 reads a program, an OS code, and the like and performs processing time or resource allocation or the like necessary for execution of the program, the OS code, and the like, thereby processing a process that is the unit of execution of the program. The system control unit 200 is capable of controlling various functions and various processes, without being limited to these examples, necessary for the operation of the flavor inhaler 1.

The battery control unit 202 determines the remaining amount of the battery 110 that supplies electric power to the flavor inhaler 1A illustrated in FIGs. 3 and 4. The battery control unit 202 measures the remaining amount of the battery 110. The battery control unit 202 measures the remaining amount of the battery on a regular basis or at any timing on the basis of information on the battery 110, such as the SOC, the integrated current value, or the voltage, detected by, for example, the sensor 112 illustrated in FIG. 3 and FIG. 4.

The battery control unit 202 compares the remaining amount of the battery 110 with one or more threshold values. Here, a threshold value is set for a battery, for example, and is indicated by a value of the remaining amount of the battery. For example, the threshold value may be indicated, as a value of the remaining amount of the battery, by percentage (%) such as 30%, by fraction such as 3/10, or by capacity such as 300 mAh. In the following, a case where the threshold value is indicated by percentage (%) will be described as an example.

A plurality of threshold values may be provided, such as a first threshold value and a second threshold value smaller than the first threshold value. A plurality of threshold values may be provided such that, for example, the first threshold value is 30% and the second threshold value is 10%. Alternatively, more threshold values may be provided. For example, a threshold value larger than the first threshold value (30%) may be set, a threshold value between the first threshold value (30%) and the second threshold value (10%) may be set, and a threshold value smaller than the second threshold value may be set. The first threshold value and the second threshold value are not limited to these examples, and may be any values or can be set in any manner. In the following, a case where the first threshold value is set to 30% and the second threshold value is set to 10% will be described as an example.

The battery control unit 202 determines whether the measured remaining amount of the battery 110 is less than the first threshold value (30%). The battery control unit 202 further determines whether the measured remaining amount of the battery 110 is less than the second threshold value (10%) smaller than the first threshold value (30%). The battery control unit 202 further determines whether the measured remaining amount of the battery 110 is less than the first threshold value (30%) and is greater than or equal to the second threshold value.

In addition, for example, the battery control unit 202 may detect whether the flavor inhaler 1A is connected to a charging device to determine whether the battery 110 is being charged. The battery control unit 202 may further detect an integrated current value, a voltage value, or the like of the battery 110 to determine the remaining battery amount with reference to the detected integrated current value, voltage value, or the like of the battery.

The communication control unit 204 controls communication between the flavor inhaler 1 and the user terminal 2 on the basis of the remaining amount of the battery included in the flavor inhaler 1. The communication control unit 204 can control not only wireless communication but also wired communication.

The communication control unit 204 executes an "authentication connection", which is a process of configuring a communication connection between the flavor inhaler 1 and the user terminal 2. For example, the communication control unit 202 performs an authentication connection of the flavor inhaler 1 and the user terminal 2 using Bluetooth. When an authentication connection is executed by the communication control unit 204, the flavor inhaler 1 and the user terminal 2 are brought into a "state of being authenticated and connected". Bluetooth communication is executed in units of piconets, for example. In Bluetooth communication, the user terminal 2 is referred to as a "master", and the flavor inhaler 1 is referred to as a "slave". For example, one master can be connected to seven slaves, for example. For example, the master takes the initiative of communication, and information transmission from the master to a slave is executed at any timing. On the other hand, information transmission from a slave to the master is executed in accordance with an instruction from the master (a request (inquiry) for an authentication connection). In communication between the flavor inhaler 1 and the user terminal 2, the user terminal 2 does not necessarily have to take the initiative of the communication. For example, the flavor inhaler 1 may take the initiative of the communication, and information may be transmitted from the flavor inhaler 1 to the user terminal 2 at any timing.

To establish encrypted communication between a master and one or more slaves, for example, the master and the slaves exchange shared secret information (link key) generated by a random number. Then, communication between the master and each slave is encrypted based on the link key. The key exchange and the procedure for establishing the communication connection setting between the master and the slave are referred to as "authentication connection".

An example of communication according to an embodiment of the present invention will be described. After an authentication connection is completed, the master and the slave execute communication to synchronize their timings of information transmission (TX) or timings of information reception (RX) with each other.

In the communication according to the embodiment of the present invention, for example, a "transmission frequency change" function is provided as one of the low-electric-power-consumption operations. The transmission frequency change is an operation of thinning out response communication that has to be made in response to inquiries from the master even when the slave has no information to be transmitted to the master to reduce electric power consumption.

Specifically, in typical communication between a slave and a master, the slave needs to respond to the master at every preset communication interval L of the master. For example, in a case where the slave does not respond to an inquiry from the master (such as when the slave does not respond over the number of times set in advance as the number of communication interruptions), the master disconnects the communication connection to the slave. However, the slave performs response communication in response to an inquiry from the master even if the slave has no information (for example, updated information or the like) to be transmitted, leading to unnecessary electric power consumption.

Accordingly, in the transmission frequency change, for example, setting (or changing) a transmission frequency setting value to "4" enables the slave to maintain the communication connection without responding to an inquiry from the master up to four times. In this way, the slave can thin out the response communication and reduce the electric power consumption. Even in the case of thinning out communication in response to a transmission frequency change, for example, the slave executes connection maintaining communication CM and the like for maintaining the communication connection to the master with minimum electric power consumption.

In the communication according to the embodiment of the present invention, for example, a "forced transmission" function is provided. The forced transmission is an operation in which even in a case where communication is thinned out in response to a transmission frequency change, the slave transmits predetermined information to be transmitted to the master to the master at a transmission timing that would be next before thinning. For example, when the transmission frequency setting value is set to "4" in response to a transmission frequency change, the response transmission of the slave is thinned out. Setting forced transmission makes it possible to transmit information to be transmitted to the master at a transmission timing that would be next before thinning, even in a period during which communication is thinned out (that is, in a case where a transmission frequency change is set). As described above, the transmission frequency change and the forced transmission in the communication according to the embodiment of the present invention are operations that enable efficient information transmission while being low-electric-power-consumption operations.

The communication control unit 204 controls communication between the flavor inhaler 1 and the user terminal 2 on the basis of the remaining amount of the battery 110. For example, the communication control unit 204 may restrict the communication between the flavor inhaler 1 and the user terminal 2. For example, the communication control unit 204 may restrict the transmission of information from the communication unit 108 illustrated in FIGs. 3 and 4 to the user terminal 2. Restricting transmission of information reduces the electric power consumption of the flavor inhaler 1A and also reduces battery consumption. For example, in Bluetooth communication, transmission of information requires larger electric power consumption of the battery 110 than reception of information. Preferentially restricting transmission of information can further reduce the consumption of the battery 110.

For example, the communication control unit 204 may change the content of settings for communication executed between the flavor inhaler 1 and the user terminal 2, based on the remaining amount of the battery 110. For example, the communication control unit 204 may change the frequency of communication between the flavor inhaler 1 and the user terminal 2, based on the remaining amount of the battery 110. The communication control unit changes the length of the preset communication interval to change the communication interval. For example, the communication control unit 204 can increase the frequency of communication per unit time by shortening the communication interval, and can decrease the frequency of communication per unit time by lengthening the communication interval.

Further, for example, the communication control unit 204 may change the response frequency of the flavor inhaler 1A to an inquiry from the user terminal 2. For example, the communication control unit 204 changes the transmission frequency setting value from "4" to "6", thereby thinning out responses of the flavor inhaler 1A to inquiries from the user terminal 2 at regular intervals. As a result, the frequency of transmission and reception of information per unit time is reduced, and electric power consumption is reduced. In contrast, the transmission frequency change function changes the transmission frequency setting value from "4" to "3", thereby increasing responses of the flavor inhaler 1A to inquiries from the user terminal 2 at regular intervals. As a result, the frequency of transmission and reception of information per unit time is increased, and electric power consumption is increased. The communication control unit 204 may change the setting of whether to execute the "forced transmission" function.

The content of settings for communication between the flavor inhaler 1 and the user terminal 2 may be initially set by the communication control unit 204 or by the communication unit 108 illustrated in FIGs. 3 and 4. For example, the initial setting of communication is performed based on information recorded in advance in the flavor inhaler 1, information entered by the user, or information included in an authentication connection request or the like from the user terminal 2.

Further, for example, in a case where communication is restricted based on the remaining amount of the battery 110, the communication control unit 204 may release the control of communication if the battery 110 is in a state of being charged (for example, a state in which the battery 110 is being charged in response to a connection of the flavor inhaler 1 to a charging device (not illustrated), or the like). In this configuration, it is possible to release the restriction of communication when the battery is in a state of being charged.

The control of communication includes stopping the communication unit 108 from transmitting at least part of specific information that can be transmitted to the user terminal 2. Specifically, the control of communication may permit the communication unit 108 to transmit only a response to an authentication connection request to the user terminal 2. In addition, when an authentication connection is placed on standby, the communication control unit 204 may execute the authentication connection (for example, respond to the request) after the heating of the heater is completed.

"Control" of communication between the flavor inhaler 1 and the user terminal 2 includes, for example, "restriction" of the communication. The "restriction" of communication includes, for example, "restricting the transmission of information" between the flavor inhaler 1 and the user terminal 2. Further, the "restriction" of communication includes, for example, "restricting an authentication connection" that is a process of configuring a communication connection between the flavor inhaler 1 and the user terminal 2.

The "control" of communication between the flavor inhaler 1 and the user terminal 2 includes, for example, "changing the content of the settings for the communication". "Changing the content of the settings for communication" includes, for example, "changing the frequency of communication" between the flavor inhaler 1 and the user terminal 2. "Changing the frequency of communication" includes, for example, "changing the response frequency" of the flavor inhaler 1 to an inquiry from the user terminal 2. Specifically, the communication control unit 204 may execute communication in accordance with the response frequency to be changed. Further, "changing the frequency of communication" includes, for example, "changing a transmission frequency setting value" between the user terminal 2 and the flavor inhaler 1. Specifically, the communication control unit 206 may execute wireless communication in accordance with the transmission frequency setting value to be changed. Further, "changing the frequency of communication" includes, for example, "changing a communication interval" between the user terminal 2 and the flavor inhaler 1. Specifically, the communication control unit 204 may execute communication in accordance with the communication interval to be changed.

The "restriction of an authentication connection" includes "placing an authentication connection on standby" by the flavor inhaler 1, and includes waiting, by the flavor inhaler 1, for a response to a request for an authentication connection from the user terminal 2.

The "restriction" of communication between the flavor inhaler 1 and the user terminal 2 includes, for example, "stop" of the communication. The "stop" of the communication includes, for example, "stopping the transmission of information" from the flavor inhaler 1 to the user terminal 2. Further, the "restriction" of communication includes, for example, "stopping an authentication connection" that is a process of configuring a communication connection between the flavor inhaler 1 and the user terminal 2. Specifically, for example, the communication control unit 204 may stop communication between the flavor inhaler 1 and the user terminal 2. For example, the communication control unit 204 may control communication such that the communication unit 108 illustrated in FIGs. 3 and 4 stops transmitting information to the user terminal 2. The communication control unit 204 may control communication such that the communication unit 108 stops receiving information from the user terminal 2.

Restricting or stopping at least one of transmission of information or reception of information reduces the electric power consumption of the flavor inhaler 1A and also reduces battery consumption. For example, transmission of information requires larger electric power consumption of the battery 110 than reception of information. Preferentially restricting or stopping transmission of information can further reduce the consumption of the battery 110.

The control of communication is not limited to the example described above. For example, the control of communication includes prohibiting the communication unit 108 from transmitting at least part of information that can be transmitted to the user terminal 2.

Further, the control of communication may permit the communication unit 108 to transmit only a response to an authentication connection request to the user terminal 2. For example, during execution of a puff action on the flavor inhaler 1, the communication control unit 204 may permit the communication unit 108 to receive a request for an authentication connection from the user terminal 2. The communication control unit 204 may execute an authentication connection (for example, respond to the request) after the heating of the heater is completed.

### [Communication Control Process]

### <First Embodiment>

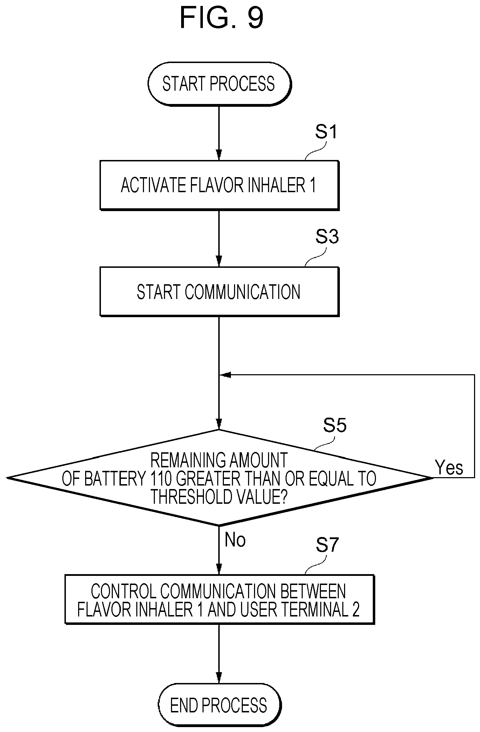

An example of a communication control process according to a first embodiment of the present invention will be described with reference to FIG. 9. FIG. 9 is a flowchart illustrating an example of the communication control process according to the first embodiment of the present invention.

As illustrated in FIG. 9, in step S1, the flavor inhaler 1 is activated. Although not illustrated in FIG. 9, for example, a user presses a power button (not illustrated) on the outer surface of the flavor inhaler 1 to activate the flavor inhaler 1. The process for activating the flavor inhaler 1 is not limited to pressing of the power button and may be, for example, a puff action or the like on the flavor inhaler 1. Any method for activating the flavor inhaler 1 may be used. The process for activating the flavor inhaler 1 is similarly executed in communication control processes according to embodiments described below.

In step S3, communication is started between the flavor inhaler 1 and the user terminal 2.

In step S5, the flavor inhaler 1 determines whether the battery 110 is greater than or equal to a threshold value. If the battery 110 is not greater than or equal to the threshold value (in the case of No), the flavor inhaler 1 proceeds to step S7. If the battery 110 is greater than or equal to the threshold value (in the case of Yes), the flavor inhaler 1 stands by. Although not illustrated in FIG. 9, for example, the flavor inhaler 1 measures the remaining amount of the battery 110 and compares the remaining amount of the battery 110 with the threshold value. Although not illustrated in FIG. 9, for example, if the measured remaining amount of the battery 110 is not greater than or equal to a first threshold value (for example, 30% or the like) (in the case of No), the flavor inhaler 1 proceeds to step S7. On the other hand, if the measured remaining amount of the battery 110 is greater than or equal to the first threshold value (for example, 30% or the like) (in the case of Yes), the flavor inhaler 1 stands by.

In step S7, the flavor inhaler 1 controls the communication between the flavor inhaler 1 and the user terminal 2. Although not illustrated in FIG. 9, for example, the flavor inhaler 1 may restrict the communication between the flavor inhaler 1 and the user terminal 2. For example, the flavor inhaler 1 may restrict the transmission of information to the user terminal 2. Further, the flavor inhaler 1 may change the content of the settings for the wireless communication. Further, the flavor inhaler 1 may restrict an authentication connection that is a process of configuring a communication connection between the flavor inhaler 1 and the user terminal 2. Although not illustrated in FIG. 9, step S5 in which the communication is restricted may be followed by a step in which the flavor inhaler 1 releases the restriction of the communication when the remaining amount of the battery 110 becomes greater than or equal to the first threshold value.

As described above, according to the first embodiment of the present invention, communication executed between the flavor inhaler 1 and the user terminal is controlled based on the remaining amount of the battery 110. As a result, an increase in the electric power consumption of the flavor inhaler 1 can be suppressed, and thus the consumption of the battery 110 included in the flavor inhaler 1 can be reduced.

### <Second Embodiment>

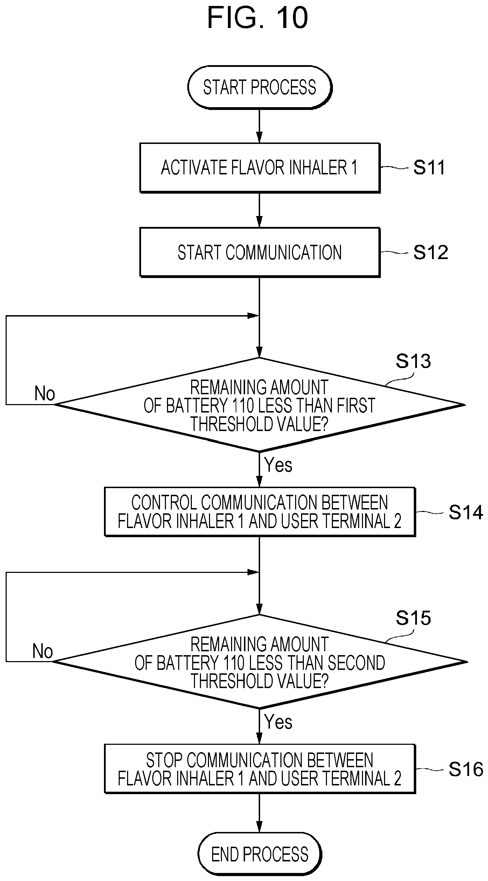

A second embodiment presents a communication control process in a case where a plurality of threshold values are set for the remaining amount of the battery 110. FIG. 10 is a flowchart illustrating an example of the communication control process according to the second embodiment of the present invention. Step S11 and step S12 illustrated in FIG. 10 are similar to step S1 and step S3 illustrated in FIG. 9, and a description thereof will be omitted.

If the remaining amount of the battery 110 is less than a first threshold value (for example, 30% or the like) in step S13 (in the case of Yes), the flavor inhaler 1 proceeds to step S14. On the other hand, if the remaining amount of the battery 110 is greater than or equal to the first threshold value (for example, 30% or the like) (in the case of No), the flavor inhaler 1 stands by.

In step S14, the flavor inhaler 1 controls the communication between the flavor inhaler 1 and the user terminal 2. Although not illustrated in FIG. 10, for example, the flavor inhaler 1 may restrict the communication between the flavor inhaler 1 and the user terminal 2. For example, the flavor inhaler 1 may restrict the transmission of information to the user terminal 2. Further, the flavor inhaler 1 may change the content of the settings for the wireless communication. Further, the flavor inhaler 1 may restrict an authentication connection that is a process of configuring a communication connection between the flavor inhaler 1 and the user terminal 2. Although not illustrated in FIG. 10, step S14 in which the communication is restricted may be followed by a step in which the flavor inhaler 1 releases the restriction of the communication when the remaining amount of the battery 110 becomes greater than or equal to the first threshold value.

If the remaining amount of the battery 110 is less than a second threshold value (for example, 10% or the like) smaller than the first threshold value (for example, 30% or the like) in step S15 (in the case of Yes), the flavor inhaler 1 proceeds to step S16. On the other hand, if the remaining amount of the battery 110 is greater than or equal to the second threshold value (for example, 10% or the like) (in the case of No), the flavor inhaler 1 stands by.

In step S16, the flavor inhaler 1 stops the communication between the flavor inhaler 1 and the user terminal 2. Although not illustrated in FIG. 10, step S16 in which the communication is stopped may be followed by a step in which the flavor inhaler 1 releases the stop of the communication when the remaining amount of the battery 110 becomes greater than or equal to the second threshold value in response to, for example, the battery 110 being charged.

In this configuration, even after wireless communication is controlled, the flavor inhaler 1 can release the restriction of the wireless communication in a stepwise manner when the remaining amount of the battery 110 is recovered in response to charging of the battery 110.

As described above, according to the second embodiment of the present invention, the remaining amount of the battery 110 is compared with a plurality of threshold values for the remaining amount of the battery 110 in a stepwise manner, and communication between the flavor inhaler 1 and the user terminal 2 is controlled in a stepwise manner based on the comparison results. Therefore, it is possible to reduce the consumption of the battery 110 and to execute the optimum communication according to the remaining amount of the battery 110.

### <Third Embodiment>

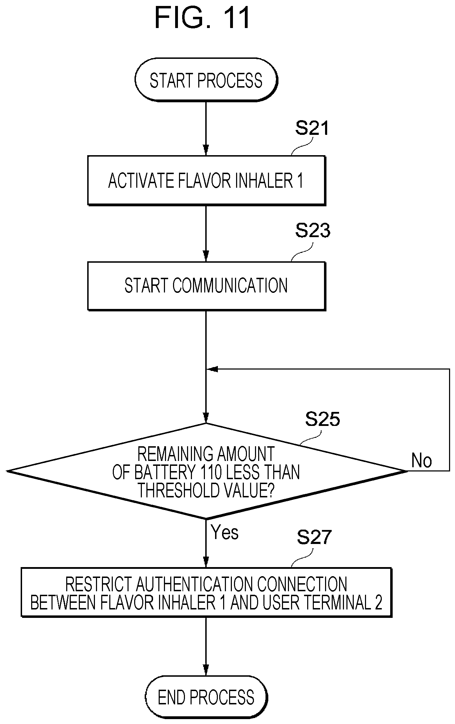

A third embodiment presents a communication control process for restricting an authentication connection to control communication. FIG. 11 is a flowchart illustrating an example of the communication control process according to the third embodiment of the present invention.

As illustrated in FIG. 11, in step S21, for example, a user activates the flavor inhaler 1. Although not illustrated in FIG. 11, the user presses a power button (not illustrated) on the outer surface of the flavor inhaler 1 to activate the flavor inhaler. The process for activating the flavor inhaler 1 is not limited to pressing of the power button and may be, for example, a puff action or the like on the flavor inhaler 1. Any method for activating the flavor inhaler 1 may be used.

In step S23, communication is started between the flavor inhaler 1 and the user terminal 2.

In step S25, the flavor inhaler 1 determines whether the battery 110 is less than a threshold value. If the battery 110 is less than the threshold value (in the case of Yes), the flavor inhaler 1 proceeds to step S27. On the other hand, if the battery 110 is greater than or equal to the threshold value (in the case of No), the flavor inhaler 1 stands by. Although not illustrated in FIG. 11, for example, the flavor inhaler 1 measures the remaining amount of the battery 110 and compares the remaining amount of the battery 110 with the threshold value. Although not illustrated in FIG. 11, for example, if the measured remaining amount of the battery 110 is less than a first threshold value (for example, 30% or the like) (in the case of Yes), the flavor inhaler 1 proceeds to step S27. On the other hand, if the measured remaining amount of the battery 110 is greater than or equal to the first threshold value (for example, 30% or the like) (in the case of No), the flavor inhaler 1 stands by.

In step S27, the flavor inhaler 1 controls an authentication connection between the flavor inhaler 1 and the user terminal 2. Although not illustrated in FIG. 11, for example, the control of the authentication connection includes placing the authentication connection on standby by the flavor inhaler 1. In this case, the flavor inhaler 1 waits for a response to the request for an authentication connection from the user terminal 2. Although not illustrated in FIG. 11, for example, the control of the authentication connection includes stopping the authentication connection by the flavor inhaler 1.

As described above, according to the third embodiment of the present invention, an authentication connection executed between the flavor inhaler 1 and the user terminal is controlled based on the remaining amount of the battery 110. As a result, an increase in the electric power consumption of the flavor inhaler 1 can be suppressed, and thus the consumption of the battery 110 included in the flavor inhaler 1 can be reduced.

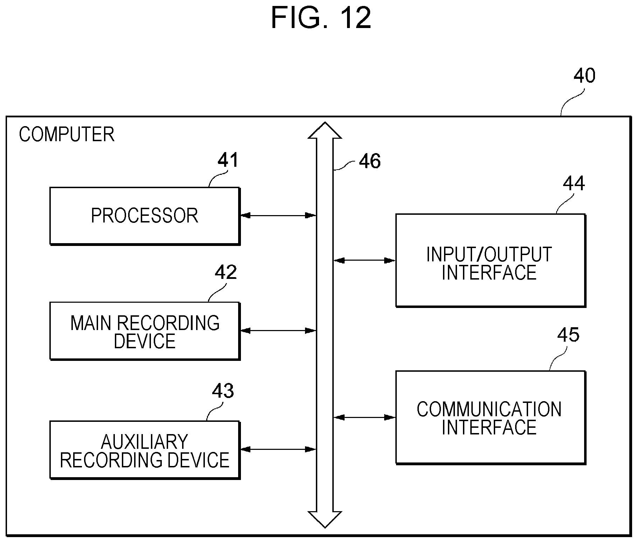

FIG. 12 is a diagram illustrating an example hardware configuration of a computer according to an embodiment of the present invention. An example hardware configuration of a computer that can be used to configure the user terminal 2 illustrated in FIG. 1 will be described with reference to FIG. 12.

As illustrated in FIG. 12, a computer 40 mainly includes, as hardware resources, a processor 41, a main recording device 42, an auxiliary recording device 43, an input/output interface 44, and a communication interface 45, and these are connected to each other via a bus line 46 including an address bus, an information bus, a control bus, and the like. An interface circuit (not illustrated) may be interposed, as necessary, between the bus line 46 and each hardware resource.

The processor 41 controls the entire computer. The main recording device 42 provides a work area for the processor 41 and is a volatile memory such as an SRAM (Static Random Access Memory) or a DRAM (Dynamic Random Access Memory). The auxiliary recording device 43 is a non-volatile memory such as an HDD, an SSD, or a flash memory that stores a program, information, and the like that are software. The program, the information, and the like are loaded from the auxiliary recording device 43 to the main recording device 42 via the bus line 46 at any point in time.

The input/output interface 44 performs one or both of presenting information and receiving input of information, and is a digital camera, a keyboard, a mouse, a display, a touch panel display, a microphone, a speaker, a temperature sensor, or the like.

It will be apparent to a person skilled in the art that the computer 40 can function as desired means, execute desired steps, and implement desired functionality through cooperation of the hardware resources exemplified above and software.

The embodiments described above are intended to facilitate understanding of the present invention and are not to be construed as limiting the present invention. The present invention may be modified/improved without departing from the gist thereof, and the present invention also includes equivalents thereof.

### Reference Signs List

- 1, 1A, 1B: flavor inhaler
- 2: user terminal
- 11: sensor
- 12: change part
- 13: control unit
- 14: communication unit
- 21: sensing unit
- 22: output unit
- 23: input unit
- 24: recording unit
- 25: communication unit
- 26: control unit
- 100: information processing system
- 102: first member
- 104: second member
- 106: control unit
- 108: communication unit
- 110: battery
- 112: sensor
- 114: memory
- 116: reservoir
- 118: atomizing unit
- 120: air intake flow path
- 121: aerosol flow path
- 122: inhalation port part
- 126: third member
- 128: flavor source
- 131: housing
- 131A: top housing
- 131B: bottom housing
- 132: cover
- 132B: opening
- 133: switch
- 134: lid part
- 140: inhalation article
- 161, 162: end
- 200: system control unit
- 202: battery control unit
- 204: communication control unit

## Claims

1. A battery unit for an aerosol generation device for generating an aerosol, the battery unit comprising:
a communication unit configured to execute wireless communication between the aerosol generation device and a user terminal; and
a control unit configured to determine a remaining amount of a battery that supplies electric power to the aerosol generation device, wherein
the control unit is configured to control the wireless communication based on the remaining amount of the battery.

2. The battery unit according to claim 1, wherein
the control unit is configured to
restrict the wireless communication when the remaining amount of the battery is less than a first threshold value.

3. The battery unit according to claim 2, wherein
the control unit is configured to
restrict transmission of information to the user terminal to restrict the wireless communication.

4. The battery unit according to claim 2 or 3, wherein
the control unit is configured to
change content of a setting for the wireless communication to restrict the wireless communication.

5. The battery unit according to claim 4, wherein
the control unit is configured to
change a frequency of the wireless communication between the aerosol generation device and the user terminal to change the content of the setting.

6. The battery unit according to claim 5, wherein
the control unit is configured to
change a response frequency to an inquiry from the user terminal to change the frequency of the wireless communication.

7. The battery unit according to claim 5, wherein
the control unit is configured to
change a communication interval between the aerosol generation device and the user terminal to change the frequency of the wireless communication.

8. The battery unit according to claim 2, wherein
the control unit is configured to
restrict an authentication connection that is a process of configuring a communication connection between the aerosol generation device and the user terminal to restrict the wireless communication.

9. The battery unit according to claim 8, wherein
the control unit is configured to
place an authentication connection that is a process of configuring a communication connection between the aerosol generation device and the user terminal on standby to restrict the authentication connection.

10. The battery unit according to any one of claims 1 to 8, wherein
the control unit is configured to
stop the wireless communication when the remaining amount of the battery is less than a second threshold value smaller than the first threshold value.

11. The battery unit according to claim 9, wherein
the control unit is configured to
stop transmission of information to the user terminal to stop the wireless communication.

12. An aerosol generation device for generating an aerosol, the aerosol generation device comprising:
a communication unit configured to execute wireless communication between the aerosol generation device and a user terminal; and
a control unit configured to determine a remaining amount of a battery that supplies electric power to the aerosol generation device, wherein
the control unit is configured to
control the wireless communication based on the remaining amount of the battery.

13. An information processing method executed by an aerosol generation device for generating an aerosol, the information processing method comprising:
a step of executing wireless communication between the aerosol generation device and a user terminal;
a step of determining a remaining amount of a battery that supplies electric power to the aerosol generation device; and
a step of controlling the wireless communication based on the remaining amount of the battery.

14. A program for causing a computer to implement:
a communication function of executing wireless communication between the aerosol generation device and a user terminal; and
a control function of determining a remaining amount of a battery that supplies electric power to the aerosol generation device, wherein
the control function
controls the wireless communication based on the remaining amount of the battery.
